# EUROPÄISCHE PATENTSCHRIFT

(11) **EP 0 437 222 B1**
(45) Veröffentlichungstag und Bekanntmachung des Hinweises auf die Patenterteilung: **15.03.1995**
(21) Anmeldenummer: 91100137.8
(22) Anmeldetag: 04.01.1991
(51) Int. Cl.: F16N 7/32

(54) **Verfahren und Vorrichtung zur kontinuierlichen Versorgung von Schmierstellen mit Schmieröl**
Method and device for continual lubrication
Procédé et dispositif pour lubrification en continu

(30) Priorität: 12.01.1990 DE 4000733
(43) Veröffentlichungstag der Anmeldung: 17.07.1991
(73) Patentinhaber: DE LIMON FLUHME GMBH, D-40227 Düsseldorf (DE)
(72) Erfinder: Saretzky, Horst, W-5828 Ennepetal 13 (DE)
(74) Vertreter: Stenger, Watzke & Ring Patentanwälte

(56) Entgegenhaltungen:
- EP-A- 0 026 488
- DE-A- 2 158 998
- US-A- 3 941 210
- US-A- 4 448 285

## Beschreibung

Die Erfindung betrifft ein Verfahren zur Versorgung von Schmierstellen mit Schmieröl, bei dem bei niedrigem Druck in einem Öler Schmieröl mit Hilfe eine Druckluftstroms in kleinste Teilchen zertrennt wird und ein Ölnebel hergestellt, zu Düsen im Bereich der Schmierstellen transportiert und dort rückverdichtet wird und ein Impulsschmierung bei hohem Druck in vorbestimmten Impulsfolgen duchgeführt wird, wobei mit einem Luftdruck > 1 bar unter Umgehung des Ölers die Düsen beaufschlagt werden. Die Erfindung betrifft weiterhin eine Vorrichtung zur Ausführung dieses Verfahrens.

Zur Schmierung thermisch hoch belasteter Lager, Spindeln mit sehr hohen Drehzahlen und Umfangsgeschwindigkeiten oder bei Lagern, die der Einwirkung schädlicher Gase oder Staub ausgesetzt sind, wird in zunehmendem Maße auf die Ölnebelschmierung zurückgegriffen. Bei diesem Schmierverfahren wird das Öl in Nebelform kontinuierlich mit Hilfe von Druckluft nierdrigen Drucks zu den Schmierstellen geleitet. Diese Verfahren finden auch dann Anwendung, wenn schwer zugängliche Stellen, insbesondere auch komplette Getriebe geschmiert werden müssen, wie z.B. bei Werkzeugmaschinen, Textilmaschinen und Papiermaschinen.

Diese Verfahren haben den Nachteil, daß sie durch den geringen Anlagendruck nicht angewendet werden können, wenn die Schmierstellen durch Radialwinde schnell unlaufender Bauteile sogenannte Luftbarrieren aufweisen, die überwunden werden müssen.

Ferner sind aus der EP-C- 0 026 488 ein Verfahren und eine Vorrictung zur intermittierenden Versorgung von Schmierstellen mit Schmieröl bekannt. Bei diesem Verfahren wird das Schmieröl in vor den Schmierstellen angeordneten Sammelkörpern angesammelt, bis diese annähernd gesättigt sind. Anschließen werden die Schmierstoffleitungen mit Druckluft gespült, wobei der Öler abgeschaltet ist. Abschließend wird das Leitungssystem mit einem erhöhten Luftdruck beaufschlagt, so daß sich der Speicherkörper ganz oder teilweise entleert und das ausgetriebene Schmieröl in Richtung auf die Schmierstelle mit hoher Geschwindigkeit gespritzt wird.

Bei diesem bekannten Verfahren ist es nachteilig, daß die Schmierstellen nur intermittierend mit Schmieröl versorgt werden. Durch die Ansammlung des Schmieröls in dem Speicherkörper und durch das kurzzeitige Beaufschlagen des Schmierleitungssystems mit Druckluft ist ein dosiertes kontinuierliches Schmieren der Schmierstellen nicht möglich. Zur Ausführung diese Verfahrens ist eine Vorrichtung offenbart, die eine Ventilanordnung zur Steuerung der Schmierölzufuhr sowie einen porösen Speicherkörper aufweist, der unmittelbar vor der Schmierstelle angeordnet ist. Bei diesem porösen Speicherkörper handelt es sich um einen porösen Kunststoff, einen Sintermetall- oder einen ähnlichen Körper aus Filz oder aus Docht.

Derartige Speicherkörper neigen zu einer schnellen Verschmutzung und einer statischen Ablagerung von Öl, die den Luftdurchsatz durch den Speicherkörper einengen und einen sehr hohen Wertungs- und Reinigungsaufwand erfordern. Die Speicherkörper erfüllen nach einer gewissen Einsatzzeit nicht mehr ihre Aufgabe, so daß sie gagen neue Speicherkörper ausgewechselt werden müssen und als ölverschmutzte Rückstände die Umwelt belasten.

Weiterhin besteht bei den Speicherkörpern aus Kunststoff bzw. aus Filz oder Docht die Gefahr, daß sich einzelne Partikelchen losen, die vom Luftstrom in die Schmierstellen getrieben werden.

Darüber hinaus ist die aus der europäischen Patentschrift bekannte Vorrichtung mit einem sehr aufwendigen verlegungs- und schalttechnischen Aufbau verbunden.

Ausgehend von diesem Stand der Technik liegt der Erfindung die **Aufgabe** zugrunde, unter Meldung der oben genannten Nachteile ein Verfahren zur Versorgung von Schmierstellen mit Schmieröl zu schaffen, mit dem eine kontinuierliche und dosierte Zuführung von Schmieröl an Schmierstellen möglich ist, und mit dem auch schnell umlaufende Reibstellen sicher mit ausreichenden Schmierölmengen versorgt werden.

Die **Lösung** dieser Aufgabe sieht erfindungsgemäß vor, daß der Ölnebel bei einem Druck zwischen 40 bis 200 mbar hergestellt wird, zwischen den Impulsfolgen eine kontinuierliche Versorgung dar Schmierstellen durchgeführt wird und als Düsen Hochleistungsverdichterdüsen mit einer Packung aus globularen, gegeneinander beweglichen Teilchen verwendet werden.

Gegenüber den vorbekannten Verfahren werden die Schmierstellen nunmehr nicht nur intermittierend alt Schmieröl versorgt, sondern zwischen den Impulsfolgen, die sicherstellen, daß auch bei schnellumlaufendan Schmierstellen eine ausreichende Schmierölversorgung stattfindet, zusätzlich auch kontinuierlich versorgt. Durch die Verwendung von Hochleistungsverdichterdüsen kann dies mit vertretbarem wirtschaftlichen Aufwand erfolgen. Darüber hinaus werden die Nachteile des Zusetzens der Speicherkörper und des Partikelablösens vermieden. Schließlich ist die nach der Erfindung erstellte Vorrichtung mit einem sehr viel geringeren verlegungs- und schaltungstechnischen Aufbau verbunden.

Durch die Verwendung von Hochleistungsverdichterdüsen ist eine fast 100 % Rückverdichtung des Ölnebels möglich. Hierdurch ist sichergestellt, daß das Schmieröl annähernd vollständig von der Druckluft getrennt wird, die am Ende der Schmierstelle austritt. Auf diese Weise werden die Maschinenteile, die Arbeitsplätze und die Umwelt nicht mit Ölnebelresten verschmutzt. Die kontinuierliche Schmiermittelzuführung ermöglicht zum einen eine sehr genaue Dosierung des Schmiermittels und verhindert zum anderen eventuelle Schäden an Lagern oder dgl. durch eine Unterbrechung der Schmiermittelzuführung. Desweiteren ist die Anwendung des erfindungsgemäßen Verfahrens wartungs- und reinigungsarm, da bei dem Verfahren keine Speicherkörper verwendet werden, die eine sehr begrenzte Lebensdauer haben und des öfteren ausgewechselt werden müssen.

Bei einer bevorzugten Ausführungsform des Verfahrens hat die Druckluft der vorbestimmten Impulsfolgen einen Druck von 2 bis 7 bar, so daß die rückverdichteten Ölpartikel vollständig der Schmierstelle zugeführt werden und zwar auch dann, wenn Hemmnisse, wie größere Radialwinde überwunden werden müssen. Eventuelle Agglomerationen, die sich bei dem Transport des Ölnebels durch die Schmierstoffleitungen bilden, werden aufgelöst. Auch gewährt der zusätzliche Druck die Möglichkeit, den Schmierstoff hinter der Düse durch längere Leitungen zu entferteren Schmierstellen zu transportieren.

Es ist weiterhin vorteilhaft, wenn die Impulsfolgen in Abhängigkeit von der Dauerschmierung variiert werden Hierdurch wird eine sehr gut dosierte Schmierung der Schmierstellen erzielt.

Zur Durchführung des Verfahrens wird erfindungsgemäß eine Vorrichtung vorgeschlagen, mit einer separaten Druckluftleitung, die direkt unter Umgehung des Ölers mit der Schmierstoffleitung verbunden ist und mit Druckluft > 1 bar mittels eines Magnetventils in Intervallen beaufschlagbar ist.

Die erfindungsgemäße Vorrichtung hat einen sehr hohen Ausfällungsgrad, d.h die mikrofeinen Ölpartikelchen werden fast vollständig aus dem Ölnebelstrom herausgetrennt. Es besteht praktisch nach Austritt des Ölnebelstroms aus der Hochleistungsverdichterdüse eine annähernd vollständige Trennung der Druckluft vom Öl. Somit ist die aus der Schmierstelle entweichende Druckluft schmiermittelfrei und nicht umweltbelastend. Dabei erreicht der Schmierstoff die Schmierstelle auch dann, wenn störende Einflüsse zu überwinden sind.

Durch den guten Wirkungsgrad der Hochleistungsverdichterdüse ist eine kontinuierliche Zufuhr von Schmieröl an die Schmierstellen möglich. Die Hochleistungsverdichterdüse bedarf keiner aufwendigen Wartungs- und Reinigungsarbeiten. Es ist demzufolge auch kein Spülvorgang mit Druckluft notwendig, so daß auch der konstruktive Aufbau der Vorrichtung sehr einfach ist.

Vorzugsweise zweigt die separate Druckluftleitung vor dem Öler von der Druckluftleitung ab. Hierdurch werden beide Druckluftleitungen von einer Druckluftquelle versorgt.

In einer bevorzugten Ausführungsform ist zwischen einen Öler und einem Verbindungspunkt der separaten Druckluftleitung mit der Schmierstoffleitung ein Rückschlagventil angeordnet. Durch dieses Rückschlagventil wird verhindert, daß der Ölnebel insbesondere bei der Impulsbeaufschlagung in den Öler zurückgedrückt wird.

Zweckmäßigerweise sind in der ersten und in der separaten Druckluftleitung jeweils ein Filter und ein Regelventil angeordnet, so daß der in den Öler bzw. in die Schmierstoffleitung einströmende Luftstrom einen konstanten Druck aufweist und nicht verunreinigt ist.

Bei einer bevorzugten Ausführungsform sing mehrere Hochleistungsverdichterdüsen an einem Verteilerblock angeordnet, der an eine Schmierstoffzweigleitung angeschlossen ist, die mit der Schmierstoffleitung verbunden ist. Auf diese Weise können mehrere beieinanderleigende Schmierstellen von einer Schmierstoffzweigleitung versorgt werden und kann der Konstrucktionsaufwand verringert werden.

Um den Schmierstoff auch an die Schmierstellen zu transportieren, die schlecht zugänglich sind, ist es vorteilhaft, hinter den Hochleistungsverdichterdüsen Schmierrohre anzuordnen, die das Schmiermittel zu den Schmierstellen führen. Aufgrund der sehr guten Wirkfunktion der Hochleistungsverdichterdüsen in Verbindung mit der Intervallbeaufschlagung können nach einer Hochleistungsverdichterdüse auch längere Wege, auch in Form von Bohrungen angeordnet sein.

Bei einer bevorzugten Ausführungsform weisen die den Schmierstellen zugewandten Schmierrohrenden einen geringeren Durchmesser auf, als die Düsenausgänge. Hierdurch sind längere Schmierrohre möglich, so daß die Hochleistungsverdichterdüse nicht unmittelbar an der Schmierstelle angeordnet sein muß. Dies ist vor allem dann wichtig, wenn Schmierstellen mit Schmieröl versorgt werden sollen, die in beengten Raumverhältenissen angeordnet sind und damit schwer zugänglich sind.

Bei einer weiteren Ausgestaltung ist jede Schmierstoffzweigleitung über eine Druckluftzweigleitung mit der separaten Druckluftleitung verbunden. Hierdurch ist es u.a. möglich, den unterschiedlichen Schmierstoffbedarf verschiedener Schmierstellen zu steuern.

Es ist vorteilhaft, wenn jede Druckluftzweigleitung ein Magnetventil aufweist, mit dem die Druckluftzweigleitung abgesperrt werden kann.

Vorzugsweise weist die Vorrichtung zwei Schmierstoffzweigleitungen auf, die über jeweils eine Druckluftzweigleitung mit der separaten Druckluftleitung verbunden sind und die jeweils ein Magnetventil aufweisen. Die beiden Magnetventile der beiden Druckluftzweigleitungen werden wechselweise geöffnet und geschlossen. Hierdurch ist es möglich, den unterschiedlichen Bedarf an verschiedenen Schmierstellen zu decken und die Hochleistungsverdichterdüse mit zeitlich versetzten Impulsfolgen erhöhten Luftdrucks zu beaufschlagen, so daß jeweils einer Schmierstoffzweigleitung der gesamte Druck der separaten Druckluftleitung zur Verfügung steht. Darüber hinaus können unterschiedliche Schmierstoffbedarfamengen durch unterschiedliche Düsenaustrittsquerschnitte (Bohrungen) bestimmt werden, wobei die Benetzung der beweglichen Teile mit Öl durch die Größe der Düsenaustrittsbohrung variiert wird.

Weitere Einzelheiten und Vorteile des Gegenstands der Erfindung ergeben sich aus der nachfolgenden Beschreibung der Zeichnung, in der zwei bevorzugte Ausführungsformen einer erfindungsgemäßen Vorrichtung zur Versorgung von Schmierstellen mit Schmieröl dargestellt sind.

In der Zeichnung zeigt:
- Fig. 1: eine erste Ausführungsform einer Schaltungsanordnung der Vorrichtung zur Versorgung von Schmierstellen mit Schmieröl;
- Fig. 2: eine zweite Ausführungsform der Schaltungsanordnung der erfindungsgemäßen Vorrichtung;
- Fig. 3: die Anordnung von Hochleistungsverdichterdüsen in einem Getriebe und
- Fig. 4: eine Hochleistungsverdichterdüse.

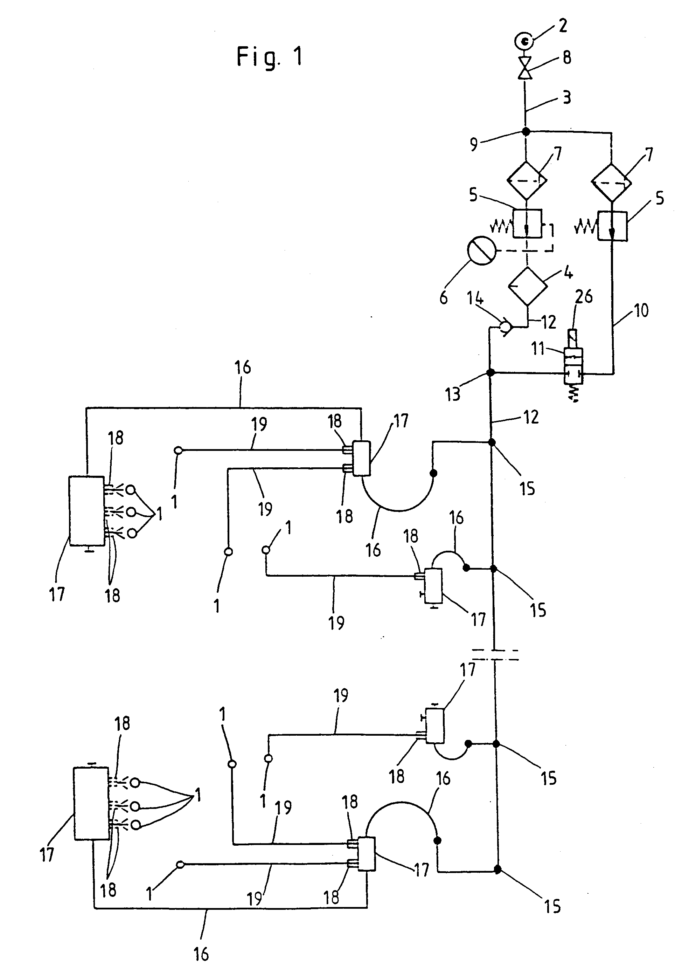

In der Fig. 1 ist eine Ölnebel-Zentralschmieranlage zur Versorgung von Schmierstellen 1 mit Schmieröl schematisch dargestellt. Von einer Druckluftquelle 2 führt eine erste Druckluftleitung 3 zu einem Öler 4.

Vor den Öler 4 ist ein Regelventil 5 geschaltet, das mittels eines Manometers 6 überwachbar ist. Desweiteren sind in der ersten Druckluftleitung 3 ein Filter 7 zur Reinigung der Druckluft und ein Kugelhahn 8 angeordnet, mit dem die Druckluftzufuhr in die Vorrichtung unterbrochen werden kann.

Zwischen dem Kugelhahn 8 und dem Filter 2 zweigt an einem Abzweigpunkt 9 eine separate Druckluftleitung 10 ab, in die ebenfalls ein Filter 7 und ein Regelventil 5 sowie zusätzlich ein Magnetventil 11 geschaltet ist.

An einen Ausgang des Ölers 4 ist eine Schmierstoffleitung 12 angeschlossen, in die an einem zweiten Abzweigpunkt 13 die zweite Druckluftleitung 10 mündet. Zwischen dem Öler 4 und dem zweiten Abzweigpunkt 13 ist in der Schmierstoffleitung 12 eine Rückschlagventil 14 derart geschaltet, daß nur eine Strömungsrichtung auf dem Öler 4 heraus möglich ist.

Die Schmierstoffleitung 12 weist Abzweigpunkte 15 auf, an die mehrere Schmierstoffzweigleitungen 16 angeschlossen sind. Diese Schmierstoffzweigleitungen 16 sind an Verteilerblöcke 17 angeschlossen, in denen ausgangsseitig Hochleistungsverdichterdüsen 18 angeordnet sind, die entweder direkt an den Schmierstellen 1 angeordnet sein können oder mit den Schmierstellen 1 über Schmierrohre 19 verbunden sind.

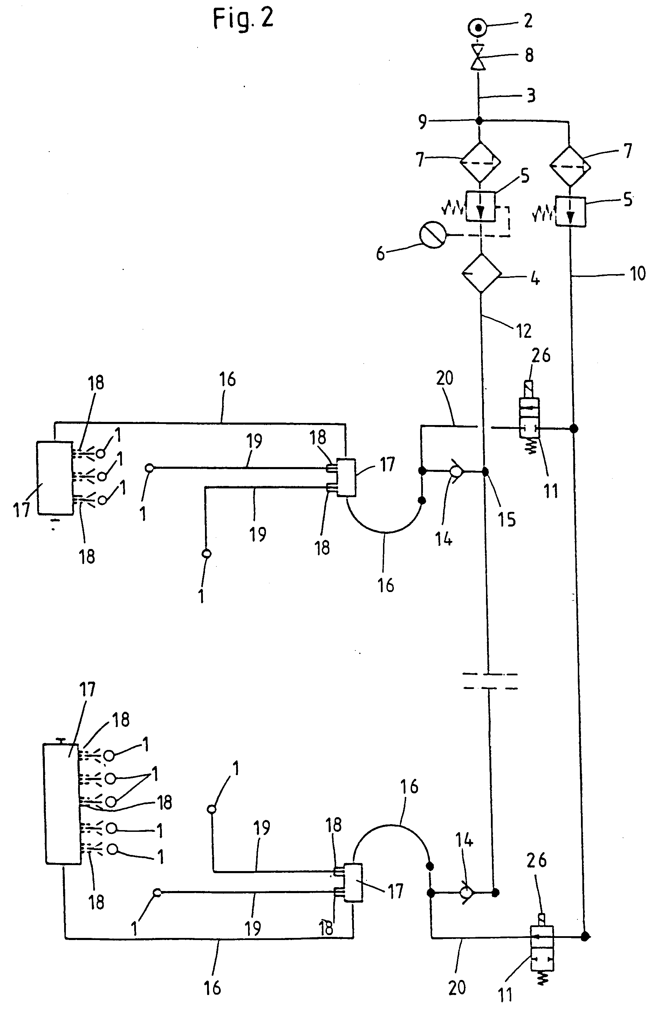

Die in Fig. 2 dargestellte zweite Ausführungsform der erfindungsgemäßen Vorrichtung unterscheidet sich von der ersten Ausführungsform dadurch, daß die separate Druckluftleitung 10 über zwei Druckluftzweigleitungen 20 direkt mit jeweils einer Schmierstoffzweigleitung 16 verbunden ist.

Jede Druckluftzweigleitung 20 weist ein Magnetventil 11 auf. Die Magnetventile 11 sind so geschaltet, daß eine der Magnetventile 11 geöffnet ist, wenn das andere Magnetventil 11 geschlossen ist.

Ein weiterer Unterschied zwischen den beiden Ausführungsformen gemäß Fig. 1 und Fig. 2 besteht darin, daß in Fig. 2 jede Schmierstoffzweigleitung 16 ein Rückschlagventil 14 aufweist, das zwischen dem Abzweigpunkt 15 der Schmierstoffzweigleitung 16 von der Schmierstoffleitung 12 und dem Abzweigpunkt 13 zwischen der Schmierstoffzweigleitung 16 und der Druckluftzweigleitung 20 angeordnet ist.

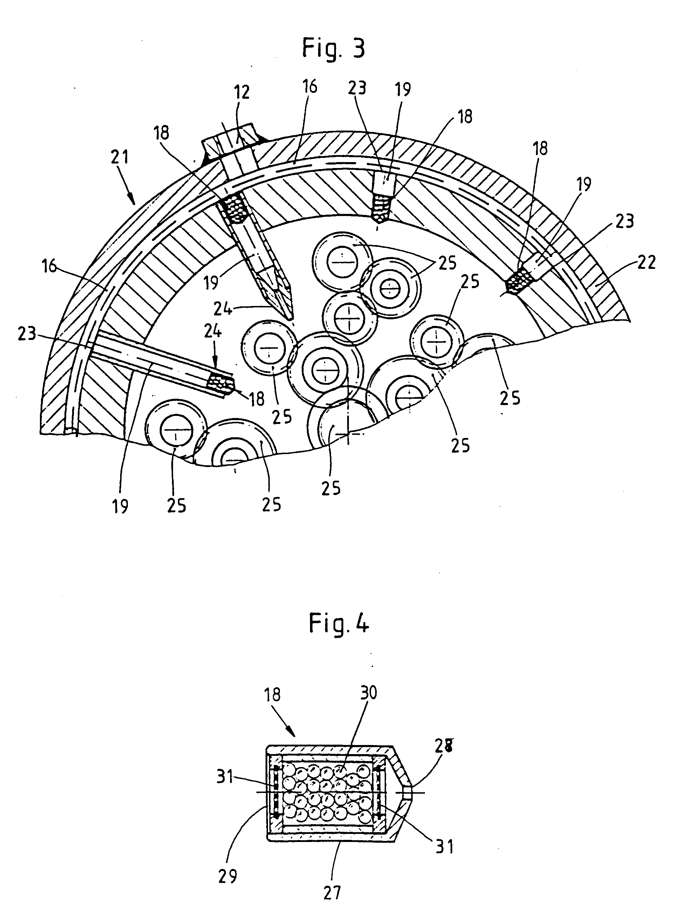

In Fig. 3 ist die Anordnung von Hochleistungsverdichterdüsen 18 in einem Getriebe 21 dargestellt.

In einem zylindrischen Getriebegehäuse 22 sind mehrere Schmierrohre 19 radial nach innen in das Getriebe 21 gerichtet angeordnet. Die Schmierrohre 19 sind über eine ringförmige Schmierstoffzweigleitung 16 miteinander verbunden, die an eine Schmierstoffleitung 12 angeschlossen ist.

Jedes Schmierrohr 19 weist eine Hochleistungsverdichterdüse 18 auf. Diese Hochleistungsverdichterdüsen 18 sind zum einen direkt an der Übergagsstelle von der Schmierstoffzweigleitung 16 in das Schmierrohr 19 angeordnet oder befinden sich zum anderen an dem dem Inneren des Getriebes zugwandten Ende des Schmierrohre 19.

Im ersten Fall weist das Schmierrohr 19 an seinem dem Getriebeinneren zugewandten Schmierrohrende 24 eine Querschnittsverringerung auf.

Die Schmierrohre 19 sind so ausgerichtet, daß sie die im Getriebegehäuse 22 angeordneten Zahnräder 25 mit Schmierstoff besprühen.

Die Abbildung 4 zeigt eine Hochleistungsverdichterdüse, wie sie im Getriebe der Abbildung 3 verwendet wird. Die Verdichterdüse 18 weist einen zylindrisches Gehäuse 27 mit einer Eingangsöffnung 29 und einer Düsenaustrittsbohrung 28 auf. Der Durchmesser der Düsenaustrittsbohrung 28 ist wesentlich kleiner als der Durchmesser der Eingangsöffnung 29. Unmittelbar hinter der Eingangsöffnung 29 und vor der Düsenaustrittsbohrung 28 ist jeweils eine Siebscheibe 31 angeordnet. Im Inneren des Gehäuses 27 sind zwischen den Siebscheiben 31 eine Vielzahl von Kunststoff- oder Metallkugeln 30 angeordnet, die eine Teilchenpackung bilden, deren Teilchen gegeneinander beweglich sind. Die einzelnen Kugeln 30 haben eine Durchmesser der geringfügig größer als 1 mm ist. Die Packungsdichte ist derart gewählt, daß sich die Kugeln 30 leicht unter dem Einfluß der Strömung gegeneinander nach allen Richtungen bewegen können, wobei die Beweglichkeit durch die aufgrund der Kugelform gegeben Abrollmöglichkeit unterstützt wird. Durch das spezifische Gewicht der Kunststoff- oder Metallkugeln 30 und die gegeben Beweglichkeit stellt sich im Betrieb ein Fließbetteffekt ein.

Die Funktion der Vorrichtung und die Ausführung des Verfahrens ist wie folgt:
Ein mit Öl gefüllter Öler 4 wird von einer Druckluftquelle 2 über eine erste Druckluftleitung 3, in der ein Kugelhahn 8, ein Filter 7 und ein Regelventil 5 geschaltet sind, mit Druckluft versorgt. In dem Öler 4 wird ein Ölnebel erzeugt, der über eine Schmierstoffleitung 12 mehreren Schmierstoffzweigleitungen 16 zugeführt wird.

Die Schmierstoffzweigleitungen 16 weisen an ihren Enden Verteilerblöcke 17 auf, an denen ausgangsseitig Hochleistungsverdichterdüsen 18 angeordnet sind. In diesen Hochleistungverdichterdüsen 18 wird der Ölnebel wieder in die Bestandteile Druckluft und Schmieröl zerlegt. Die Druckluft tritt annähernd schmierölfrei aus den Düsen bzw. den daran angeordneten Schmierrohren 19 und Schmierstellen 1 aus. Das Schmieröl, das bis zu den Düsen 18 nur in mikrofeinen Tropfen in der Druckluft vorgelegen hat, agglomeriert in den Hochleistungsverdichterdüsen 18 zu schmierfähigen Makrotropfen, die den Schmierstellen 1 zugeführt werden.

Es ist auch möglich, die agglomerierten schmierfähigen Makrotropfen in Schmierrohre 19 zu leiten, die ausgangsseitig an den Hochleistungsverdichterdüsen 18 angeschlossen sind. Diese Schmierrohre 19 sind mit Schmierstellen 1 verbunden. Auf diese Weise besteht die Möglichkeit, auch Schmierstellen 1 mit Schmieröl zu versorgen, bei denen aufgrund der beengten Raumverhältnisse keine Hochleistungsverdichterdüse 18 direkt angeordnet werden kann.

Das Verfahren wird mit einem über das Regelventil 5 geregelten Druck ausgeführt. Zur Erhöhung des Drucks in der Schmierstoffleitung 12 und in den Schmiersotffzweigleitungen 16 ist eine separate Druckluftleitung 10 mit der Druckluftquelle 2 verbunden. Auch in dieser separaten Druckluftleitung 10 ist ein Regelventil 5 angeordnet sowie eine Magnetventil 11. Die separate Druckluftleitung 10 kann somit geschlossen oder geöffnet sein.

Ist das Magnetventil 11 geöffnet, wird der Schmierstoffleitung 12 und den Schmierstoffzweigleitungen 16 zusätzlich Druckluft aus der separaten Druckluftleitung 10 zugeführt. Diese vorzugsweise intermittierend zugeführte Druckluft sorgt für eine Druckerhöhung in den Hochleistungsverdichterdüsen 18 und damit für ein zusätzliches Heraustreiben der hier agglomerierten schmierfähigen Makrotropfen. Die somit beschleunigten Makrotropfen können dann auch Luftbarrieren überwinden, die durch sogenannte Radialwinde schnell umlaufender Bauteile entstehen können.

Durch die am Schmierrohrende 24 angeordnete Querschnittsverringerung werden die Makrotropfen nochmals beschleunigt, so daß die Überwindung der Radialwinde durch die Makrotropfen sichergestellt ist.

### Bezugszeichenliste:

- 1: Schmierstellen
- 2: Druckluftquelle
- 3: erste Druckluftleitung
- 4: Öler
- 5: Regelventil
- 6: Manometer
- 7: Filter
- 8: Kugelhahn
- 9: Abzweigpunkt
- 10: zweite Druckluftleitung
- 11: Magnetventil
- 12: Schmierstoffleitung
- 13: Abzweigpunkt
- 14: Rückschlagventil
- 15: Abzweigpunkt
- 16: Schmierstoffzweigleitung
- 17: Verteilerblock
- 18: Hochleistungsverdichterdüse
- 19: Schmierrohr
- 20: Druckluftzweigleitung
- 21: Getriebe
- 22: Getriebegehäuse
- 23: Übergangsstelle
- 24: Schmierrohrende
- 25: Zahnräder
- 26: Schaltvorrichtung
- 27: Gehäuse
- 28: Düsenaustrittsbohrung
- 29: Eingangsöffnung
- 30: Kugelpackung
- 31: Siebscheibe

## Patentansprüche

1. Verfahren zur Versorgung von Schmierstellen mit bei dem bei niedrigem Druck in einem Öler Schmieröl mit Hilfe eines Druckluftstroms in kleinste Teilchen zertrennt wird und ein Ölnebel hergestellt, zu Düsen im Bereich der Schmierstellen transportiert und dort rückverdichtet wird und eine Impulsschmierung bei hohem Druck in vorbestimmten Impulsfolgen durchgeführt wird, wobei mit einem Luftdruck > 1 bar unter Umgehung des Ölers die Düsen beaufschlagt werden,
**dadurch gekennzeichnet**,
daß der Ölnebel bei einem Druck zwischen 40 bis 200 mbar hergestellt wird, zwischen den Impulsfolgen eine kontinuierliche Versorgung der Schmierstellen durchgeführt wird und als Düsen Hochleistungsverdichterdüsen mit einer Packung aus globularen, gegeneinander beweglichen Teilchen verwendet werden.

2. Verfahren nach Anspruch 1, dadurch gekennzeichnet, daß bei der Impulsschmierung nur Düsen ausgewählter Schmierstellen beaufschlagt werden.

3. Verfahren nach einem der Ansprüche 1 oder 2, dadurch gekennzeichnet, daß die Benetzung der durch die Schmierstellen versorgten beweglichen Teile mit Öl durch die Größe der Düsenaustrittsbohrung variiert wird.

4. Verfahren nach einem Ansprüche 1 bis 3, dadurch gekennzeichnet, daß die Impusfolge variiert wird und daß die Dauer der Impulsschmierung in Abhängigkeit vom Betriebsdruck der Dauerschmierung gesteuert wird und vorzugsweise zwischen 1 und 20 Sekunden beträgt.

5. Vorrichtung zur Durchführung des Verfahrens nach einem der Ansprüche 1 bis 4, mit einem Öler (4), einer Druckluftleitung (3), einer Schmierstoffleitung (12) und einer Hochleistungsverdichterdüse (18),
**gekennzeichnet durch**
eine separate Druckluftleitung (10), die direkt unter Umgehung des Ölers mit der Schmierstoffleitung (12) verbunden ist und mit Druckluft > 1 bar in Intervallen durch ein Magnetventil (11) beaufschlaft ist.

6. Vorrichtung nach Anspruch 5, dadurch gekennzeichnet, daß die separate Druckluftleitung (10) vor dem Öler (4) von der Druckluftleitung (3) abzweigt.

7. Vorrichtung nach Anspruch 5 oder 6, dadurch gekennzeichnet, daß zwischen dem Öler (4) und einem Abzweigpunkt (13) der separaten Druckluftleitung (10) mit der Schmierstoffleitung (12) ein Rückschlagventil (14) angeordnet ist.

8. Vorrichtung nach einem der Ansprüche 5 bis 7, dadurch gekennzeichnet, daß in der ersten Druckluftleitung (3) und in der separaten Druckluftleitung (10) jeweils ein Filter (7) und ein Regelventil (5) angeordnet sind.

9. Vorrichtung nach einem der Ansprüche 5 bis 8, dadurch gekennzeichnet, daß and die Hochleistungsverdichterdüsen (18) Schmierrohre (19) angeschlossen sind, deren den Schmierstellen (1) zugewandten Schmierrohrenden (24) vorzugsweise einen geringeren Durchmesser aufweisen als die Düsenausgänge.

10. Vorrichtung nach einem der Ansprüche 5 bis 9, dadurch gekennzeichnet, daß die Schmierstoffleitung (12) eine Schmierstoffzweigleitung (16) aufweist, an die ein Verteilerblock (17) angeschlossen ist, an dessen Ausgängen zum einen Hochleistungsverdichterdüsen (18) mit nachgeschalteten Schmierrohren (19) und zum anderen eine Verlängerung der Schmierstoffzweigleitung (16) angeschlossen sind, an deren Ende wiederum ein Verteilerblock (17) angeschlossen ist.

11. Vorrichtung nach Anspruch 10, dadurch gekennzeichnet, daß jede Schmierstoffzweigleitung (16) über eine Druckluftzweigleitung (20) mit der separaten Druckluftleitung (10) verbunden ist.

12. Vorrichtung nach Anspruch 11, dadurch gekennzeichnet, daß jede Druckluftzweigleitung (20) ein Magnetventil (11) aufweist, mit dem die Druckluftzweigleitung (20) abgesperrt werden kann.

13. Vorrichtung nach Anspruch 11 oder 12, dadurch gekennzeichnet, daß vorzugsweise zwei Schmierstoffzweigleitungen (16) über jeweils eine Druckluftzweigleitung (20), die jeweils ein Magnetventil (11) aufweist, mit der separaten Druckluftleitung (10) verbunden ist, und daß die zwei Magnetventile (11) in den beiden Druckluftzweigleitungen (20) wechselweise geöffnet und geschlossen werden.

## Claims

1. Method for supplying lubricating oil to lubricating points, in which at low pressure in an oiler lubricating oil is separated with the aid of a compressed air stream into the smallest particles and thereby producing an oil vapour which is transported to nozzles in the area of the lubricating points where the oil vapour is recompressed, and an impulse lubrication at predetermined impulse intervals is carried out at high pressure, in which the nozzles are subjected to an air pressure of > 1 bar whilst bypassing the oiler, **characterised** in that the oil vapour is produced at a pressure of between 40 and 200 mbar, the lubricating points are continuously supplied between the impulse sequences and the nozzles are high-performance compressor nozzles with a packing of globular particles which move relative to each other.

2. Method according to claim 1, **characterised** in that only nozzles of selected lubricating points are subjected to the impulse lubrication.

3. Method according to one of the claims 1 or 2, **characterised** in that the wetting of the movable parts with oil supplied by the lubricating points is varied by the size of the nozzle opening.

4. Method according to one of the claims 1 to 3, **characterised** in that the impulse sequence is varied and the duration of the impulse lubrication is controlled as a function of the operating pressure of the permanent lubrication process and preferably lasts between 1 and 30 seconds.

5. Device for carrying out the method according to one of the claims 1 to 4, with an oiler (4), a pressure pipe (3), a lubricant pipe (12) and a high-performance compressor nozzle (18), **characterised** by a separate compressed air pipe (10) which is directly connected to the lubricant pipe (12) whilst bypassing the oiler and at intervals is subjected to compressed air > 1 bar through a magnetic valve (11).

6. Device according to claim 5, **characterised** in that before the oiler (4) the separate compressed air pipe (10) branches off the compressed air pipe (3).

7. Device according to claim 5 or 6, **characterised** in that a backpressure valve (14) is arranged between the oiler (4) and a branch-off point (13) of the separate compressed air pipe (10) with the lubricant pipe (12).

8. Device according to one of the claims 5 to 7, **characterised** in that in the first compressed air pipe (3) and in the separate compressed air pipe (10) there is arranged in each case a filter (7) and a control valve (5).

9. Device according to one of the claims 5 to 8, **characterised** in that to the high-performance compressor nozzles (18) are connected lubricating pipes (19) whose ends (24) facing the lubricating points (1) preferably have a smaller diameter than the nozzle outlets.

10. Device according to one of the claims 5 to 9, **characterised** in that the lubricant pipe (12) has a lubricant branch pipe (16) to which is connected a distributer block (17) to the outlets of which on the one hand are connected high-performance compressor nozzles (18) with series-connected lubricating pipes (19) and on the other hand an extension of the lubricating branch pipe (16) whose end in turn is connected to a distributer block (17).

11. Device according to claim 10, **characterised** in that each lubricant branch pipe (16) is connected via a compressed air branch pipe (20) to a separate compressed air pipe (10).

12. Device according to claim 11, **characterised** in that each compressed air branch pipe (20) has a magnetic valve (11) through which the compressed air branch pipe (20) can be shut off.

13. Device according to claim 11 or 12, **characterised** in that preferably two lubricant branch pipes (16) are connected to the separate compressed air pipe (10) in each case via a compressed air pipe (20), each having a magnetic valve (11), and that the two magnetic valves (11) in the two compressed air branch pipes (20) are alternately opened and closed.

## Revendications

1. Procédé destiné à alimenter des points de lubrification à l'aide d'huile de lubrification, selon lequel, à basse pression dans un appareil d'huilage, de l'huile de lubrification est décomposée en particules les plus fines à l'aide d'un courant d'air comprimé, en réalisant ainsi un brouillard d'huile, est transportée vers des buses dans la zone des points de lubrification et y est re-condensée, et l'on effectue une lubrification par impulsions à haute pression, selon une succession prédéterminée d'impulsions, les buses étant alimentées par une pression d'air > 1 bar, en dérivation de l'appareil d'huilage, caractérisé en ce que le brouillard d'huile est réalisé à une pression comprise entre 40 et 200 mbar, en ce que l'on effectue une alimentation continue des points de lubrification, entre la succession d'impulsions, et en ce que l'on utilise, en guise de buses, des buses de condensation à haut rendement, renfermant une garniture de particules globulaires mobiles les unes par rapport aux autres.

2. Procédé selon la revendication 1, caractérisé en ce que lors de la lubrification par impulsions, seules sont alimentées des buses de points de lubrification sélectionnés.

3. Procédé selon l'une des revendications 1 ou 2, caractérisé en ce que l'on fait varier le mouillage par l'huile des pièces mobiles alimentées par les points de lubrification, par la grandeur de l'alésage de sortie des buses.

4. Procédé selon l'une des revendications 1 à 3, caractérisé en ce que l'on fait varier la succession d'impulsions et en ce que la durée de la lubrification par impulsions est commandée en fonction de la pression de service de la lubrification continue, et est de préférence comprise entre 1 et 20 secondes.

5. Dispositif pour la mise en oeuvre du procédé selon l'une des revendications 1 à 4, comprenant un appareil d'huilage (4), une conduite d'air comprimé (3), une conduite de fluide de lubrification (12) et une buse de condensation à haut rendement (18), caractérisé par une conduite d'air comprimé séparée (10), qui est reliée directement, en dérivation de l'appareil d'huilage (4), à la conduite de fluide de lubrification (12), et est alimentée en air comprimé > 1 bar, par intervalles, au moyen d'une électrovanne (11).

6. Dispositif selon la revendication 5, caractérisé en ce que la conduite d'air comprimé séparée (10) est dérivée de la conduite d'air comprimé (3), en amont de l'appareil d'huilage (4).

7. Dispositif selon la revendication 5 ou 6, caractérisé en ce qu'entre l'appareil d'huilage (4) et un point de dérivation (13) de la conduite d'air comprimée séparée (10) sur la conduite de fluide de lubrification (12), est disposé un clapet anti-retour (14).

8. Dispositif selon l'une des revendications 5 à 7, caractérisé en ce que dans la première conduite d'air comprimé (3) et dans la conduite d'air comprimée séparée (10), sont disposés à chaque fois un filtre (7) et une soupape de régulation (5).

9. Dispositif selon l'une des revendications 5 à 8, caractérisé en ce qu'aux buses de condensation à haut rendement (18) sont raccordés des tubes de lubrification (19), dont les extrémités de tubes (24) dirigées vers les points de lubrification, présentent de préférence un diamètre plus faible que les sorties des buses.

10. Dispositif selon l'une des revendications 5 à 9, caractérisé en ce que la conduite de fluide de lubrification (12) comporte une conduite de fluide de lubrification en dérivation (16) à laquelle est raccordé un bloc distributeur (17) aux sorties duquel sont raccordés, d'une part des buses de condensation à haut rendement (18) auxquelles sont branchés des tubes de lubrification (19), et d'autre part un prolongement de la conduite de fluide de lubrification en dérivation (16), prolongement à l'extrémité duquel est à nouveau branché un bloc distributeur (17).

11. Dispositif selon la revendication 10, caractérisé en ce que chaque conduite de fluide de lubrification en dérivation (16) est reliée à la conduite d'air comprimé séparée (10), par l'intermédiaire d'une conduite d'air comprimé en dérivation (20).

12. Dispositif selon la revendication 11, caractérisé en ce que chaque conduite d'air comprimé en dérivation (20) comporte une électrovanne (11) à l'aide de laquelle la conduite d'air comprimé en dérivation (20) peut être obturée.

13. Dispositif selon la revendication 11 ou 12, caractérisé en ce que de préférence deux conduites de fluide de lubrification en dérivation (16) sont reliées, chacune par l'intermédiaire d'une conduite d'air comprimé en dérivation (20) renfermant chacune une électrovanne (11), à la conduite d'air comprimé séparée (10), et en ce que les deux électrovannes (11) dans les deux conduites d'air comprimé en dérivation (20) sont ouvertes et fermées alternativement.
